# EUROPÄISCHE PATENTANMELDUNG

(11) **EP 4 516 168 A1**
(43) Veröffentlichungstag der Anmeldung: **05.03.2025**
(21) Anmeldenummer: 24196324.8
(22) Anmeldetag: 23.08.2024
(51) Int. Cl.: A47J 31/44, A47J 31/52, G06F 1/3218, G06F 1/3234

(54) **VERFAHREN ZUM BETREIBEN EINES HAUSHALTGERÄTS**

(30) Priorität: 31.08.2023 DE 102023208350
(71) Anmelder: BSH Hausgeräte GmbH, 81739 München (DE)
(72) Erfinder: Mirbeth, Sebastian, 83374 Traunwalchen (DE)

(57) **Zusammenfassung**

Die vorliegende Erfindung betrifft ein Verfahren zum Betreiben eines Haushaltsgeräts (1), insbesondere eines Kaffeevollautomaten (3), wobei Funktionsprozesse bereitgestellt werden, welche für eine jeweils zugehörige Funktionsdauer (DF) automatisiert ausgeführt werden.

Eine erhöhte Effizienz des Haushaltsgeräts (1) bei zugleich Beibehaltung des Komforts wird dadurch erreicht, dass eine Beleuchtungsstärke zumindest einer Leuchtkomponente (2) des Haushaltsgeräts (1) wenigstens reduziert wird, wenn die Funktionsdauer (DF) des aktiven Funktionsprozesses oberhalb einer vorgegebenen Funktionsgrenzdauer (DG) liegt.

Die Erfindung betrifft des Weiteren ein Computerprogrammprodukt zur Ausführung des Verfahrens sowie ein zur Ausführung des Verfahrens eingerichtetes Haushaltsgerät (1).

## Beschreibung

Die vorliegende Erfindung betrifft ein Verfahren zum Betreiben eines Haushaltsgeräts, insbesondere eines Kaffeevollautomaten, in welchem automatisiert ausgeführte Funktionsprozesse bereitgestellt werden. Die Erfindung betrifft zudem ein Computerprogrammprodukt zur Ausführung des Verfahrens sowie ein zur Ausführung des Verfahrens eingerichtetes Haushaltsgerät.

Haushaltsgeräte stellen üblicherweise unterschiedliche Funktionen zum Betreiben des Haushaltsgeräts bereit. Zu solchen Haushaltsgeräten zählen insbesondere Kaffeevollautomaten. Derartige Funktionen können je nach Bedarf oder Zweck auch automatisiert, also ohne weiteres Zutun eines Nutzers, ausgeführt werden.

Die vorliegende Erfindung beschäftigt sich mit der Aufgabe, für ein Verfahren zum Betreiben eines Haushaltsgeräts der vorstehend genannten Art sowie für ein Computerprogrammprodukt zur Ausführung des Verfahrens verbesserte oder zumindest andere Ausführungsformen anzugeben, welche sich insbesondere durch eine erhöhte Effizienz bei auszeichnen.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht demnach auf dem Grundgedanken, in einem Haushaltsgerät bei der automatisierten Ausführung von Funktionen des Haushaltsgeräts eine Beleuchtungsstärke von leuchtenden Komponenten des Haushaltsgeräts zumindest zu reduzieren, insbesondere die Beleuchtung gänzlich zu beenden, wenn die automatisierte Ausführung der Funktion lange dauert. Somit kommt es zu einem insgesamt reduzierten Energieverbrauch des Haushaltsgeräts und folglich zu einer erhöhten Effizienz. Erfindungsgemäß wurde dabei erkannt, dass das Leuchten besagter Komponente bei langer Ausführung von Funktionen vom Nutzer nicht gebraucht wird und/oder dem Nutzer keinen Mehrwert bietet. Der reduzierte Energieverbrauch geht also mit einer Beibehaltung des Komforts für den Nutzer oder mit einer hinnehmbaren Beeinträchtigung des Komforts einher. Darüber hinaus empfinden Nutzer ein beleuchtetes Haushaltsgerät bei langer automatisierter Ausführung von Funktionen als störend, sodass besagter zumindest Reduzierung der Beleuchtungsstärke sogar zu einem erhöhten Komfort für den Nutzer führen kann.

Dem Erfindungsgedanken entsprechend weist das Haushaltsgerät zumindest eine Komponente auf, welche in einem Leuchtbetrieb leuchtet und nachfolgend auch als Leuchtkomponente bezeichnet wird. Es werden Funktionen bereitgestellt, welche beim Aktivieren für eine jeweils zugehörige Dauer automatisiert ausgeführt werden. Diese Funktionen werden nachfolgend auch als Funktionsprozesse und die Dauer der automatisierten Ausführung nachfolgend auch als Funktionsdauer bezeichnet. Dabei wird die Beleuchtungsstärke zumindest einer der wenigstens einen Komponenten wenigstens reduziert, wenn die Funktionsdauer des aktiven Funktionsprozesses oberhalb einer vorgegebenen Grenze liegt, welche nachfolgend auch als Funktionsgrenzdauer bezeichnet wird.

Beim Haushaltsgerät kann es sich prinzipiell um ein solches beliebiger Art handeln. Insbesondere handelt es sich bei dem Haushaltsgerät um einen Kaffeevollautomaten.

Die jeweilige Leuchtkomponente kann eine solche beliebiger Art sein. Die jeweilige Leuchtkomponente dient vorteilhaft der verbesserten Bedienbarkeit und/oder der Informationsübermittlung, beispielsweise über einen Betriebsstatus des Haushaltsgeräts, an einen Nutzer.

Beispielsweise kann zumindest eine der wenigstens einen Leuchtkomponenten eine LED sein.

Die automatisiert ausgeführten Funktionsprozesse dienen insbesondere einer Reinigung des Haushaltsgeräts. Zu den Funktionsprozessen gehört also insbesondere eine automatisiert ausgeführte Entkalkung des Haushaltsgeräts, insbesondere des Kaffeevollautomaten.

Vorteilhaft ist für die jeweilige Leuchtkomponente eine Regel-Beleuchtungsstärke vorgesehen, welche, insbesondere durch einen Nutzer, einstellbar sein kann. Das heißt, dass die jeweilige Leuchtkomponente im Regelbetrieb mit der Regel-Beleuchtungsstärke leuchtet. Die zumindest Reduzierung der Beleuchtungsstärke geht dabei vorteilhaft von der Regel-Beleuchtungsstärke aus. Das heißt, dass die Regel-Beleuchtungsstärke zumindest reduziert wird, wenn die Funktionsdauer des aktiven Funktionsprozesses oberhalb der vorgegebenen Funktionsgrenzdauer liegt.

Vorstellbar ist es, die Beleuchtungsstärke zumindest einer der wenigstens einen Leuchtkomponenten lediglich zu reduzieren, die Leuchtkomponente also stufenlos oder gestuft zu dimmen, wenn die Funktionsdauer des aktiven Funktionsprozesses oberhalb der vorgegebenen Funktionsgrenzdauer liegt.

Vorteilhaft wird der Leuchtbetrieb zumindest einer der wenigstens einen Leuchtkomponenten deaktiviert, die Beleuchtung also gänzlich ausgeschaltet, wenn die Funktionsdauer des aktiven Funktionsprozesses oberhalb der vorgegebenen Funktionsgrenzdauer liegt. Auf diese Weise kommt es zu einer weiteren Reduzierung, insbesondere Minimierung, des Energieverbrauchs der Leuchtkomponente und somit zu einer weiteren Erhöhung der Effizienz des Haushaltsgeräts.

Bei vorteilhaften Ausführungsformen wird die Beleuchtungsstärke zumindest einer der wenigstens einen Leuchtkomponenten reduziert, wenn die Funktionsdauer des aktiven Funktionsprozesses zwischen der Funktionsgrenzdauer und einer Obergrenze liegt, und den Leuchtbetrieb der Leuchtkomponente zu deaktivieren, wenn die Funktionsdauer des aktiven Funktionsprozesses oberhalb der Obergrenze liegt. Die Obergrenze wird nachfolgend auch als Funktionsobergrenzdauer bezeichnet. Die Funktionsobergrenzdauer gibt also vor, ob lediglich eine Reduzierung der Beleuchtungsstärke, also ein Dimmen, der Leuchtkomponente oder ein gänzliches Deaktivieren des Leuchtbetriebs erfolgt. Berücksichtigt wird dabei, dass sich ein Nutzer bei kürzeren Funktionsdauern möglicherweise in der Nähe des Haushaltsgeräts befindet, wohingegen bei längeren Funktionsdauern von einer Abwesenheit des Nutzers oder ein Desinteresse des Nutzers am Haushaltsgerät auszugehen ist. Somit kommt es bei einem reduzierten Energieverbrauch und somit erhöhter Effizienz zu einem erhöhten Komfort für den Nutzer.

Als bevorzugt gelten Ausführungsformen, bei welchen die zumindest Reduzierung der Beleuchtungsstärke nicht unmittelbar nach Aktivierung des Funktionsprozesses, sondern mit einer vorgegebenen Verzögerungsdauer beginnt. Das heißt, dass die zumindest Reduzierung der Beleuchtungsstärke zumindest einer der wenigstens einen Leuchtkomponenten mit Ablauf der Verzögerungsdauer nach Aktivierung des Funktionsprozesses erfolgt. Für die Verzögerungsdauer erfolgt also keine Änderung der Beleuchtung, sodass es zu einem erhöhten Komfort für einen Nutzer kommt.

Die Verzögerungsdauer ist zweckmäßig kleiner als die Funktionsgrenzdauer.

Bei bevorzugten Varianten wird einem Nutzer ermöglicht, die zumindest Reduzierung der Beleuchtungsstärke bei Bedarf wieder rückgängig zu machen. Dies erfolgt vorzugsweise dadurch, dass das Haushaltsgerät zumindest eine durch einen Nutzer manuell aktivierbare Bedienkomponente aufweist, wobei die Beleuchtungsstärke zumindest einer der wenigstens einen Leuchtkomponenten mit zumindest reduzierter Beleuchtungsstärke zumindest wieder erhöht, insbesondere der Leuchtbetrieb wieder aktiviert wird, wenn eine der wenigstens einen Bedienkomponenten von einem Nutzer aktiviert wird. Dies führt zu einem erhöhten Komfort.

Die jeweilige zumindest eine Bedienkomponente kann eine solche beliebiger Art sein. Beispielsweise kann es sich bei der Bedienkomponente um einen Knopf und dergleichen handeln.

Vorstellbar ist es insbesondere, dass zumindest eine der wenigstens einen Bedienkomponenten einer Leuchtkomponente entspricht.

Bei bevorzugten Ausführungsformen ist zumindest eine der wenigstens einen Leuchtkomponenten ein Touchscreen mit einer berührungsempfindlichen Lage du somit zugleich eine Bedienkomponente. Dabei bleibt die berührungsempfindliche Lage bei der zumindest Reduzierung der Beleuchtungsstärke des Touchscreens aktiviert. Somit wird die Beleuchtungsstärke bei Berührung des Touchscreens wieder erhöht, wenn zuvor die zumindest Reduzierung der Beleuchtungsstärke erfolgte.

Wie vorstehend erläutert, erfolgt die zumindest Reduzierung der Beleuchtungsstärke bei langen automatisiert ausgeführten Funktionsprozesse.

Vorteilhaft beträgt dabei die Funktionsgrenzdauer zumindest zwischen 3 Minuten und 10 Minuten. Das heißt, dass die Funktionsgrenzdauer zumindest 3 Minuten, insbesondere zumindest 10 Minuten, beträgt und entsprechend gewählt wird.

Bevorzugt beträgt die Funktionsgrenzdauer zwischen 10 und 20 Minuten, beispielsweise 15 Minuten.

Die Funktionsobergrenzdauer liegt zweckmäßig oberhalb der Funktionsgrenzdauer. Beispielsweise kann die Funktionsobergrenzdauer zwischen 20 und 45 Minuten liegen, beispielsweise 30 Minuten betragen. Entsprechend wird die Funktionsobergrenzdauer gewählt.

Die Verzögerungsdauer beträgt vorteilhaft zwischen 1 Minute und 10 Minuten, ist beispielsweise 5 Minuten. Entsprechend wird die Verzögerungsdauer gewählt.

Vorstellbar ist es, die zumindest Reduzierung der Beleuchtungsstärke zumindest einer der wenigstens einen Leuchtkomponenten in einem Energiesparmodus des Haushaltsgeräts auszuführen.

Als bevorzugt gelten Varianten, bei welchen der Energiesparmodus aktiviert und deaktiviert werden kann. Das heißt, dass bei einer Aktivierung des Energiesparmodus die zumindest Reduzierung der Beleuchtungsstärke erfolgt, wobei einem Nutzer die Möglichkeit gegeben ist, diese zumindest Reduzierung der Beleuchtungsstärke zu deaktivieren. Zu diesem Zweck ist vorteilhaft eine Benutzeroberfläche, beispielsweise am Haushaltsgerät, insbesondere am Touchscreen, vorgesehen. Alternativ oder zusätzlich kann die Benutzeroberfläche an einem mobilen Gerät, beispielsweise in Form einer sogenannten Applikation, vorgesehen sein. Das mobile Gerät ist dabei kommunizierend, vorzugsweise drahtlos kommunizierend, mit dem Haushaltsgerät verbunden oder verbindbar.

Bevorzugt wird das Verfahren mittels eines entsprechend ausgestalteten Computerprogrammprodukts ausgeführt, welches auf einem nichtflüchtigen Speicher hinterlegt, insbesondere gespeichert, ist.

Das Computerprogrammprodukt umfasst Befehle, welche bei Ausführung des Computerprogrammprodukts durch das Haushaltsgerät dieses veranlassen, das Verfahren auszuführen.

Das Computerprogrammprodukt ist vorteilhaft im Haushaltsgerät hinterlegt.

Es versteht sich, dass auch das Computerprogrammprodukt als solches auch zum Umfang dieser Erfindung gehört.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch:
- Fig. 1: eine stark vereinfachte Darstellung eines Haushaltsgeräts,
- Fig. 2: ein Flussdiagramm zum Betreiben des Haushaltsgeräts.

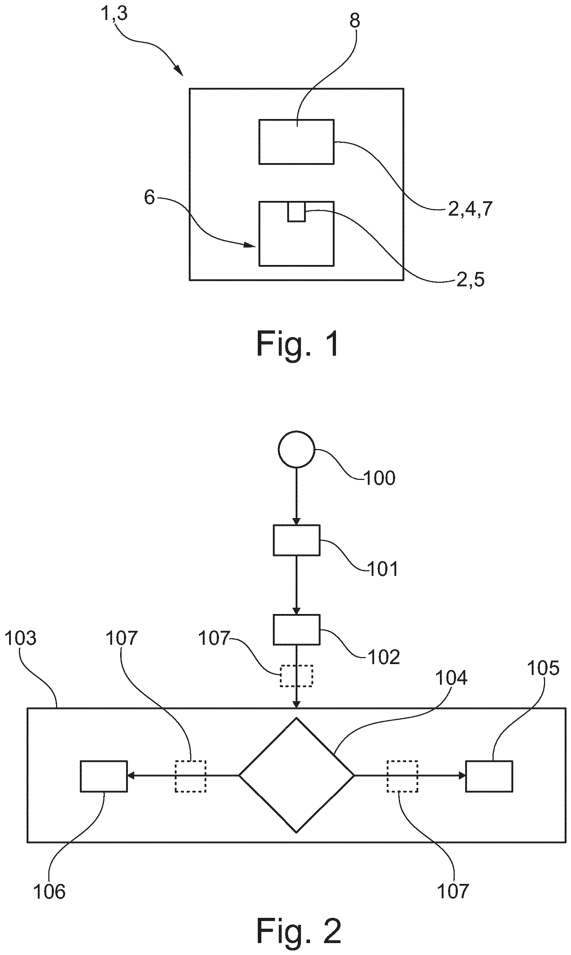

Ein Haushaltsgerät 1, wie es beispielhaft in Figur 1 gezeigt ist, weist zumindest eine Komponente 2 auf, welche in einem Leuchtbetrieb leuchtet. Die Komponente 2 wird nachfolgend auch als Leuchtkomponente 2 bezeichnet. Die jeweilige Leuchtkomponente 2 leuchtet in einem Regelbetrieb mit einer Regel-Beleuchtungsstärke, welche einstellbar sein kann. In dem in Figur 1 gezeigten Ausführungsbeispiel handelt es sich bei dem Haushaltsgerät 1 um einen Kaffeevollautomaten 3. Beim in Figur 1 gezeigten Ausführungsbeispiel weist das Haushaltsgerät 1 rein beispielhaft zwei Leuchtkomponenten 2 auf. Eine der Leuchtkomponenten 2 ist ein Touchscreen 4 und die andere Leuchtkomponente 2 eine LED 5. Die LED 5 ist im gezeigten Ausführungsbeispiel im Bereich einer Ausgabestelle 6 des Kaffeevollautomaten 3 zu Ausgabe von Getränken vorgesehen, um die Ausgabestelle 6 im Leuchtbetrieb zu beleuchten. Der Touchscreen 4 ist von einem nicht gezeigten Nutzer manuell zur Bedienung aktivierbar, also zugleich eine Bedienkomponente 7 des Haushaltsgeräts 1. Zu diesem Zweck weist der Touchscreen 4 eine nicht gezeigte berührungsempfindliche Lage auf. Dabei stellt der Touchscreen 4 dem Nutzer eine Bedienoberfläche 8 zur Verfügung.

In dem Haushaltsgerät 1 werden Funktionsprozesse bereitgestellt. Der jeweilige Funktionsprozess wird beim Aktivieren für eine zugehörige Funktionsdauer DF automatisiert ausgeführt.

Das Verfahren zum Betreiben des Haushaltsgeräts 1 wird nachfolgend anhand des in Figur 2 gezeigten Flussdiagramms erläutert. Die Ausführung des Verfahrens erfolgt bevorzugt mit einem Computerprogrammprodukt. Das Computerprogrammprodukt umfasst Befehle, welche bei Ausführung des Computerprogrammprodukts durch das Haushaltsgerät 1 das Haushaltsgerät 1 veranlassen, das Verfahren auszuführen.

Dabei wird die Beleuchtungsstärke zumindest einer der wenigstens einen Leuchtkomponenten 2 wenigstens reduziert, wenn die Funktionsdauer DF des aktiven Funktionsprozesses oberhalb einer vorgegebenen Grenze DG liegt, welche nachfolgend auch als Funktionsgrenzdauer DG bezeichnet wird. Die Funktionsgrenzdauer DG beträgt beispielsweise zumindest zwischen 3 Minuten und 10 Minuten. Insbesondere beträgt die Funktionsgrenzdauer DG 15 Minuten.

Gemäß Figur 2 wird im gezeigten Ausführungsbeispiel in einer Verfahrensmaßnahme 101 geprüft, ob ein automatisiert ausgeführter Funktionsprozess aktiviert wird. Diese Verfahrensmaßnahme wird 1 wird nachfolgend auch als Triggermaßnahme 101 bezeichnet. Sofern die Aktivierung einer solchen Funktionsprozesses vorliegt, das Ergebnis der Triggermaßnahme 101 also positiv ist, wird in einer Verfahrensmaßnahme 102 geprüft, ob die Funktionsdauer DF des aktiven Funktionsprozesses oberhalb der Funktionsgrenzdauer DG liegt. Diese Verfahrensmaßnahme 102 wird nachfolgend auch als Grenzmaßnahme 102 bezeichnet. Wenn das Ergebnis der Grenzmaßnahme 102 positiv ist, die Funktionsdauer DF also oberhalb der Funktionsgrenzdauer DG liegt, wird in einer Verfahrensmaßnahme 103 die Beleuchtungsstärke zumindest einer der wenigstens einen Leuchtkomponenten 2 wenigstens reduziert. Die Verfahrensmaßnahme 103 wird nachfolgend auch als Reduzierungsmaßnahme 103 bezeichnet. Im gezeigten Ausführungsbeispiel wird in der Reduzierungsmaßnahme 103 die Beleuchtungsstärke des der jeweiligen Leuchtkomponente 2 reduziert.

Wie Figur 2 entnommen werden kann, kann die Reduzierungsmaßnahme 103 je nach Funktionsdauer DF des aktiven Funktionsprozesses unterschiedlich umgesetzt werden. Die unterschiedliche Umsetzung hängt davon ab, ob die Funktionsdauer DF des aktiven Funktionsprozesses oberhalb einer vorgegebenen Obergrenze DGM oder unterhalb der Obergrenze DGM liegt. Die Obergrenze DGM wird nachfolgend auch als Funktionsobergrenzdauer DGM bezeichnet. Die Funktionsobergrenzdauer DGM beträgt beispielsweise zwischen 20 Minuten und 45 Minuten, beispielsweise 30 Minuten.

Dabei wird im gezeigten Ausführungsbeispiel in der Reduzierungsmaßnahme 103 in einer Verfahrensmaßnahme 104 geprüft, ob die Funktionsdauer DF des aktiven Funktionsprozesses oberhalb der Funktionsobergrenzdauer DGM liegt. Die Verfahrensmaßnahme 104 wird nachfolgend auch als Prüfmaßnahme 104 bezeichnet. Liegt die Funktionsdauer DF des aktiven Funktionsprozesses oberhalb der Funktionsobergrenzdauer DGM, wird in einer Verfahrensmaßnahme 105 der Leuchtbetrieb zumindest einer der Leuchtkomponenten 2, im gezeigten Ausführungsbeispiel der jeweiligen Leuchtkomponente 2, deaktiviert, die Beleuchtung also gänzlich runtergefahren. Diese Verfahrensmaßnahme 105 wird nachfolgend auch als Deaktivierungsmaßnahme 105 bezeichnet. Liegt die Funktionsdauer DF des aktiven Funktionsprozesses unterhalb der Funktionsobergrenzdauer DGM oder entspricht der Funktionsobergrenzdauer DGM, wird in einer Verfahrensmaßnahme 106 die Beleuchtungsstärke zumindest einer der Leuchtkomponenten 2, in dem gezeigten Ausführungsbeispiel der jeweiligen Leuchtkomponente 2, lediglich reduziert, die jeweilige Leuchtkomponente 2 also gedimmt. Die Verfahrensmaßnahme 106 wird nachfolgend auch als Dimmmaßnahme 106 bezeichnet. Somit wird also die Beleuchtungsstärke der jeweiligen Leuchtkomponente 2 reduziert, wenn die Funktionsdauer DF zwischen der Funktionsgrenzdauer DG und der Funktionsobergrenzdauer DGM liegt, und der Leuchtbetrieb deaktiviert, wenn die Funktionsdauer DF oberhalb der Funktionsobergrenzdauer DGM liegt.

Wie in Figur 2 angedeutet, kann die zumindest Reduzierung der Beleuchtungsstärke verzögert erfolgen. Das heißt, dass die zumindest Reduzierung der Beleuchtungsstärke der jeweiligen Leuchtkomponenten 2 mit Ablauf einer vorgegebenen Verzögerungsdauer DD nach Aktivierung des Funktionsprozesses erfolgt, wenn die Funktionsdauer DF des aktiven Funktionsprozesses oberhalb der Funktionsgrenzdauer DG liegt. Die entsprechende Verfahrensmaßnahme 107 wird nachfolgend auch als Verzögerungsmaßnahme 107 bezeichnet. Wie Figur 2 mit einer gestrichelten Darstellung der Verzögerungsmaßnahme 107 angedeutet, kann die Verzögerungsmaßnahme 107 entweder zwischen der Prüfmaßnehme 104 und der Deaktivierungsmaßnahme 105 und der Dimmmaßnahme 106 oder vor der Reduzierungsmaßnahme 103 vorgesehen sein. Die Verzögerungsdauer DD beträgt beispielsweise zwischen 1 Minute und 10 Minuten, insbesondere 5 Minuten.

Das Verfahren führt zu einer Reduzierung des Energieverbrauchs des Haushaltsgeräts 1 und somit einer erhöhten Effizienz, wobei zugleich der Komfort für einen Nutzer erhalten bleibt oder zumindest nicht merklich reduziert wird.

Vorteilhaft wird die Beleuchtungsstärke zumindest einer der wenigstens einen Leuchtkomponenten 2 mit zumindest reduzierter Beleuchtungsstärke zumindest wieder erhöht, insbesondere der Leuchtbetrieb wieder aktiviert, wenn die Bedienkomponente 7 von einem Nutzer aktiviert wird. Im gezeigten Ausführungsbeispiel erfolgt dies also durch eine Berührung des Touchscreens 4. Zu diesem Zweck bleibt die nicht gezeigte berührungsempfindliche Lage des Touchscreens 4 auch bei Deaktivierung des Leuchtbetriebs des Touchscreens 4 aktiv.

Wie in Figur 2 angedeutet, ist im gezeigten Ausführungsbeispiel Ausgangspunkt ein aktiver Energiesparmodus 100 des Haushaltsgeräts 1. Dabei ist es möglich, den Energiesparmodus 100 deaktivierbar auszugestalten, also einem Nutzer die Möglichkeit zu bieten, den Energiesparmodus 100 zu deaktivieren, sodass die beschriebene zumindest Reduzierung der Beleuchtungsstärke ausbleibt. Dies kann beispielsweise über die Bedienoberfläche 8 des Touchscreens 4 und/oder oder mittels einer Applikation auf einem nicht gezeigten mobilen Gerät erfolgen.

### Bezugszeichen

- 1: Haushaltsgerät
- 2: Leuchtkomponente
- 3: Kaffeevollautomat
- 4: Touchscreen
- 5: LED
- 6: Ausgabestelle
- 7: Bedienkomponente

- 100: Energiesparmodus
- 101: Triggermaßnahme
- 102: Grenzmaßnahme
- 103: Reduzierungsmaßnahme
- 104: Prüfmaßnahme
- 105: Deaktivierungsmaßnahme
- 106: Dimmmaßnahme
- 107: Verzögerungsmaßnahme

- DF: Funktionsdauer
- DG: Funktionsgrenzdauer
- DGM: Funktionsdauer
- DD: Verzögerungsdauer

## Patentansprüche

1. Verfahren zum Betrieben eines Haushaltsgeräts (1), insbesondere eines Kaffeevollautomaten (3), welches zumindest eine in einem Leuchtbetrieb leuchtende Leuchtkomponente (2) aufweist; wobei Funktionsprozesse bereitgestellt werden, wobei der jeweilige Funktionsprozess beim Aktivieren für eine zugehörige Funktionsdauer (DF) automatisiert ausgeführt wird; eine Beleuchtungsstärke zumindest einer der wenigstens einen Leuchtkomponenten (2) wenigstens reduziert wird, wenn die Funktionsdauer (DF) des aktiven Funktionsprozesses oberhalb einer vorgegebenen Funktionsgrenzdauer (DG) liegt.

2. Verfahren nach Anspruch 1, **dadurch gekennzeichnet, dass** der Leuchtbetrieb zumindest einer der wenigstens einen Leuchtkomponenten (2) deaktiviert wird, wenn die Funktionsdauer (DF) des aktiven Funktionsprozesses oberhalb der vorgegebenen Funktionsgrenzdauer (DG) liegt.

3. Verfahren nach Anspruch 2, **dadurch gekennzeichnet, dass** die Beleuchtungsstärke zumindest einer der wenigstens einen Leuchtkomponenten (2) reduziert wird, wenn die Funktionsdauer (DF) zwischen der Funktionsgrenzdauer (DG) und einer Funktionsobergrenzdauer (DGM) liegt, und der Leuchtbetrieb deaktiviert wird, wenn die Funktionsdauer (DF) oberhalb der Funktionsobergrenzdauer (DGM) liegt.

4. Verfahren nach einem der Ansprüche 1 bis 3, **dadurch gekennzeichnet, dass** die zumindest Reduzierung der Beleuchtungsstärke zumindest einer der wenigstens einen Leuchtkomponenten (2) mit Ablauf einer vorgegebenen Verzögerungsdauer (DD) nach Aktivierung des Funktionsprozesses erfolgt.

5. Verfahren nach einem der Ansprüche 1 bis 4, **dadurch gekennzeichnet, dass** das Haushaltsgerät (1) zumindest eine durch einen Nutzer manuell aktivierbare Bedienkomponente (7) aufweist; dass die Beleuchtungsstärke zumindest einer der wenigstens einen Leuchtkomponenten (2) mit zumindest reduzierter Beleuchtungsstärke zumindest wieder erhöht, insbesondere der Leuchtbetrieb wieder aktiviert wird, wenn eine der wenigstens einen Bedienkomponenten (7) von einem Nutzer aktiviert wird.

6. Verfahren nach Anspruch 5, **dadurch gekennzeichnet, dass** zumindest eine der wenigstens einen Leuchtkomponenten (2) ein Touchscreen (4) mit einer berührungsempfindlichen Lage als Bedienkomponente (7) ist; dass die berührungsempfindliche Lage bei der zumindest Reduzierung der Beleuchtungsstärke des Touchscreens (4) aktiviert bleibt.

7. Verfahren nach einem der Ansprüche 1 bis 6, **dadurch gekennzeichnet, dass** die Funktionsgrenzdauer (DG) als zumindest zwischen 10 Minuten und 20 Minuten, insbesondere als 15 Minuten, gewählt wird, oder zumindest zwischen 3 Minuten und 10 Minuten, zumindest 3, insbesondere zumindest 10 gewählt wird.

8. Verfahren nach einem der Ansprüche 4 bis 7, **dadurch gekennzeichnet, dass** die Verzögerungsdauer (DD) zwischen 1 Minute und 10 Minuten, insbesondere als 5 Minuten, gewählt wird.

9. Verfahren nach einem der Ansprüche 1 bis 8, **dadurch gekennzeichnet, dass** die zumindest Reduzierung der Beleuchtungsstärke der wenigstens einen Leuchtkomponente (2) in einem Energiesparmodus (100) des Haushaltsgeräts (1) erfolgt, wobei der Energiesparmodus (100), insbesondere über eine Benutzeroberfläche (8), durch einen Nutzer aktivierbar und deaktivierbar ist.

10. Haushaltsgerät (1), insbesondere Kaffeevollautomat (3), **dadurch gekennzeichnet, dass** es eingerichtet und programmiert ist, das Verfahren nach einem der Ansprüche 1 bis 9 auszuführen.

11. Computerprogrammprodukt, umfassend Befehle, welche bei Ausführung des Computerprogrammprodukts durch ein Haushaltsgerät (1), insbesondere nach Anspruch 10, dieses veranlassen, das Verfahren nach einem der Ansprüche 1 bis 9 auszuführen.
